# EUROPÄISCHE PATENTSCHRIFT

(11) **EP 1 732 701 B1**
(45) Veröffentlichungstag und Bekanntmachung des Hinweises auf die Patenterteilung: **08.10.2014**
(21) Anmeldenummer: 06708594.4
(22) Anmeldetag: 01.03.2006
(51) Int. Cl.: B05B 13/02

(54) **VORRICHTUNG UND VERFAHREN ZUR BESCHICHTUNG VON KLEINTEILEN**
DEVICE AND METHOD FOR COATING SMALL PARTS
DISPOSITIF ET PROCEDE DE REVETEMENT DE PETITES PIECES

(30) Priorität: 04.03.2005 DE 102005010005
(43) Veröffentlichungstag der Anmeldung: 20.12.2006
(73) Patentinhaber: Special Coatings GmbH & Co. KG, 82205 Gilching (DE)
(72) Erfinder: BRENDEL, Gerhard, 91275 Auerbach/Oberpfalz (DE)
(74) Vertreter: Lang, Christian
(86) Internationale Anmeldenummer: PCT/EP2006/060378
(87) Internationale Veröffentlichungsnummer: WO 2006/092423

(56) Entgegenhaltungen:
- EP-A- 0 744 212
- CH-A5- 673 962
- DE-U1- 8 524 347
- US-A- 3 480 468
- US-B1- 6 547 882

## Beschreibung

### Technisches Umfeld

Die vorliegende Erfindung betrifft ein Verfahren und eine Vorrichtung zur Beschichtung von Kleinteilen, insbesondere Massenkleinteilen, wie Schrauben, Kunststoffkleinteile und dergleichen.

Aus der DE 85 24 347 U1 ist eine Vorrichtung zum Überziehen von Kleinkörpern, insbesondere Pharmazeutika bekannt, welche eine sich drehende Trommel und eine im Innenraum der Trommel angeordnete Spritzpistole zur Verteilung der Überzugsmasse aufweist. Eine derartige Vorrichtung wird auch zur Lackierung von Kleinteilen eingesetzt, wobei der Lack durch Warmluft, die durch die Trommel geführt wird, getrocknet wird. Durch das Umwälzen der Kleinteile während der Beschichtung wird sichergestellt, dass die Beschichtungsmasse oder der Lack gleichmäßig auf alle Kleinteile verteilt wird. Um zu vermeiden, dass die nicht getrocknete oder ausgehärtete Beschichtung durch die Bewegung der Kleinteile und das damit verbundene Zusammenstoßen beschädigt wird, müssen die Kleinteile eine bestimmte Mindesttemperatur aufweisen, die eine schnelle Trocknung des Lacks oder Beschichtungsstoffs ermöglicht. Aus diesem Grund ist es erforderlich die Kleinteile vor Beginn der eigentlichen Beschichtung durch Umwälzen und Durchleiten der Warmluft zu erwärmen. Aus der EP 0 132 480 A1 ist eine Vorrichtung zur Herstellung von Zuckerkügelchen bekannt, bei der in einem drehbaren Kessel Mikrowellengeneratoren für die Trocknung vorgesehen sind. Aus der CH 428 094 ist eine Vorrichtung zum Überziehen von Formlingen mit einem Deckbelag bekannt, wobei die Formlinge in einer Trommel mit Lack besprüht und durch direkte Wärmeeinwirkung getrocknet werden.

### Offenbarung der Erfindung

### Technisches Problem

Es ist deshalb Aufgabe der vorliegenden Erfindung die Nachteile der bekannten Vorrichtung zu beseitigen und insbesondere eine Vorrichtung und ein Verfahren zur Verfügung zu stellen, welches eine schnelle und wirtschaftliche Beschichtung von Kleinteilen, insbesondere Massenkleinteilen bei hoher Oberflächengüte ermöglicht. Insbesondere sollen auch alle möglichen Geometrien von Kleinteilen, die zum Teil mit der bekannten Vorrichtung nicht beschichtet werden können, einer effizienten Beschichtung zugeführt werden.

### Technische Lösung

Diese Aufgabe wird gelöst durch eine Vorrichtung mit den Merkmalen des Anspruchs 1 sowie einem Verfahren mit den Merkmalen des Anspruchs 4. Vorteilhafte Ausgestaltungen sind Gegenstand der abhängigen Ansprüche.

Die Erfindung zeichnet sich dadurch aus, dass bei einer Vorrichtung bzw. einem Verfahren, bei dem die zu beschichtenden Kleinteile während einer Bewegung, wie eines ständigen Umwälzens oder Schüttelns, mit Beschichtungsstoff versehen werden, die Trocknung und/oder Aushärtung mittels Strahlungsenergie erfolgt. Als Energiestrahler kommen hierbei Infrarot (IR) - Strahler zum Einsatz, da mit diesen eine schnelle und gleichmäßige Erwärmung der zu beschichtenden Teile und/oder Aushärtung des Beschichtungsstoffsermöglicht wird. Darüber hinaus sind derartige Energiestrahler leicht zu bedienten und/oder zu steuern bzw. zu regeln, was den Beschichtungsprozess weiter vereinfacht und eine Steigerung der Effizienz ermöglicht. Insbesondere ist eine deutliche Verkürzung der Vorwärm- oder Anlaufzeit zu beobachten, die beispielsweise nötig ist, um die zu beschichtenden Kleinteile auf eine für die Beschichtung erforderliche Mindesttemperatur zu bringen. Außerdem ergibt sich insgesamt durch die schnelle und gleichmäßige Aushärtung des aufgegebenen Beschichtungsstoffs auch eine im Vergleich zum Stand der Technik deutlich verbesserte Schichtgüte und Oberflächenqualität. Als weiterer Vorteil ist zu nennen, dass Körper mit jeglicher Geometrie beschichtbar sind, die nach dem Stand der Technik nicht zufriedenstellend beschichtet werden konnten.

Als IR-Strahler kommen kurz-, mittel- und langwellige IR-Strahler in Betracht sowie Strahler mit einem Wellenlängenspektrum nahe dem IR-Bereich. Auch so genannte Carbon IR-Strahler mit einem speziellen mittelwelligen Wellenlängenspektrum haben sich als sehr wirksam erwiesen. Es können sowohl ein oder mehrere Strahlungsgeräte als auch ein oder mehrere Strahler pro Strahlungsgerät vorgesehen sein.

Die Bewegung der Kleinteile erfolgt durch Aufnahme in einer sich drehenden Trommel, welche insbesondere Mitnehmerrippen aufweist, die das Umwälzen der Kleinteile in der Trommel durch die Drehbewegung erleichtern.

Die Abgabe des Beschichtungsstoffes, insbesondere eines lösemittelhaltigen oder wasserbasierten Lacks oder eines Pulvers, erfolgt durch eine Abgabevorrichtung, die es ermöglicht dünne, feine Filme auf den zu beschichtenden Kleinteilen zu erzeugen, so dass durch die eingebrachte Strahlungsenergie eine sofortige Trocknung und/oder Aushärtung erfolgt.

Vorzugsweise ist die Abgabevorrichtung eine Sprüh- oder Spritzeinrichtung, die eine feine Zerstäubung des Beschichtungsstoffs ermöglicht, so dass sich dieser in feinsten Tropfen oder Pulverschichten auf den Kleinteilen abscheidet Die Sprüh- oder Spritzeinrichtung kann durch jede geeignete bekannte Vorrichtung gebildet werden, wobei die Zerstäubung des Beschichtungsstoffes mit einem Hilfsstoff oder -gas, wie Luft oder Wasserdampf bevorzugt ist. Insbesondere die Wasserdampf unterstütze Abscheidung mittels Spritzen hat sich als besonders vorteilhaft erwiesen. Entsprechend umfasst die erfindungsgemäße Vorrichtung entsprechenden Mittel zur Zuführung und Bereitstellung des Beschichtungsstoffs und/oder Hilfsstoffs.

Die Abgabevorrichtung ermöglicht neben der kontinuierlichen Abgabe von geringen Mengen an Beschichtungsstoff insbesondere auch die Abgabe von kleinsten Mengen an Beschichtungsstoff in intermittierenden kleinen Portionen, so dass dadurch auch eine sofortige Trocknung und/oder Aushärtung ermöglicht wird.

Vorzugsweise ist hier eine entsprechende Steuerung und/oder Regelung vorgesehen, die vorzugsweise auf einem programmierbaren Prozessor beruht. Diese Steuerung und/oder Regelung kann ebenfalls die Steuerung und/oder Regelung der Strahlungsleistung und/oder -dauer des oder der Strahlungsgeräte übernehmen. Selbstverständlich ist jedoch auch eine separate Steuerung und/oder Regelung für den oder die Strahler möglich.

Zur Regelung der Strahler und/oder der Abgabevorrichtung sind Sensoren vorgesehen, die Regelparameter, wie die Temperatur der Kleinteile oder den Wasserdampf- oder Lösemitteldampfgehalt oder der Pulvermenge in der Beschichtungsvorrichtung ermitteln.

Vorzugsweise sind in dem Aufnahmeelement, in dem die Kleinteile zur Beschichtung aufgenommen sind, Lüftungsöffnungen vorgesehen, die eine Be- und Entlüftung insbesondere zur Entfernung der Lösemittel oder des Wasserdampfs oder des Pulverstaubes ermöglichen, wobei insbesondere eine Absaugvorrichtung mit einem Ventilator mit der Abluftöffnung verbunden ist. Vorteilhaft ist hierbei, wenn die Belüftungsöffnungen so gestaltet sind, dass eine komplette Entlüftung des Aufnahmeelements bzw. der Trommel ermöglicht wird. Hierzu können an den Öffnungen Stutzen vorgesehen sein, die zumindest teilweise weit in den Aufnahmeraum ragen können.

Nach einer bevorzugten Ausführungsform sind die Lüftungsöffnungen mit ihren Stutzen an einem oder mehreren Verschlusselementen oder Deckeln, die den Aufnahmeraum des Aufnahmeelements, z.B. einer Trommel, verschließen, angeordnet, so dass sie beim Öffnen des Aufnahmeelements aus dem Aufnahmeraum entfernt werden können. Entsprechend können auch das oder die Strahlungsgeräte und/oder die Abgabevorrichtung, z.B. die Sprühpistole an einem oder mehreren Verschlusselementen angeordnet sein. Dies ermöglicht eine einfache Entleerung und Reinigung des Aufnahmeelements. Hierzu dient auch die Verschwenkbarkeit des Aufnahmeelements nach einer weiteren bevorzugten Ausführungsform.

### Kurze Beschreibung von Zeichnungen

Weitere Vorteile, Kennzeichen und Merkmale der vorliegenden Erfindung werden bei der nachfolgenden, detaillierten Beschreibung eines Ausführungsbeispiels anhand der beigefügten Zeichnungen deutlich. Die Zeichnungen zeigen hierbei rein schematisch in
Fig. 1 eine Schnittansicht von der Seite durch eine erfindungsgemäße Vorrichtung;
Fig. 2 eine Schnittansicht von oben der Vorrichtung aus Fig. 1;
Fig. 3 eine teilweise Frontansicht der Vorrichtung aus Fig. 1 und 2; und in
Fig. 4 eine teilweise Schnittansicht von der Seite entsprechend Fig. 1 in größerem Detail.

### Die beste Art und Weise, die Erfindung auszunutzen

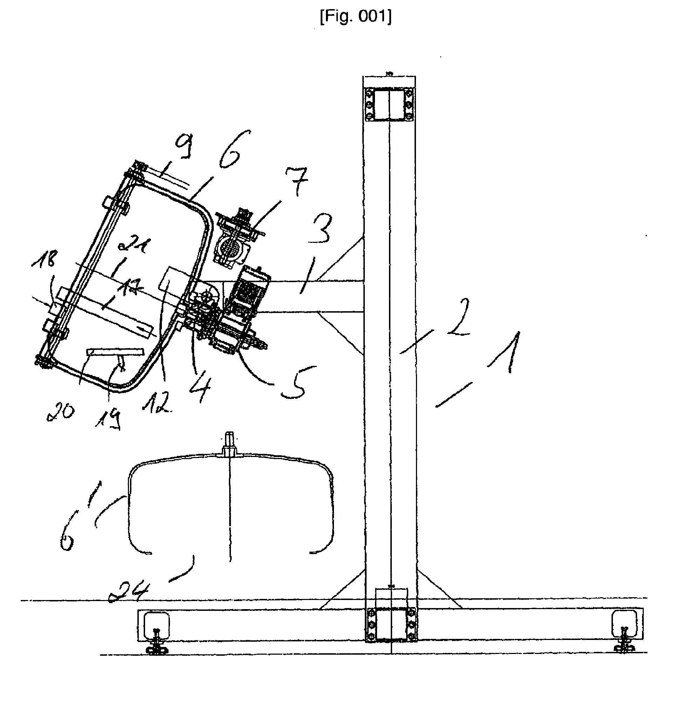

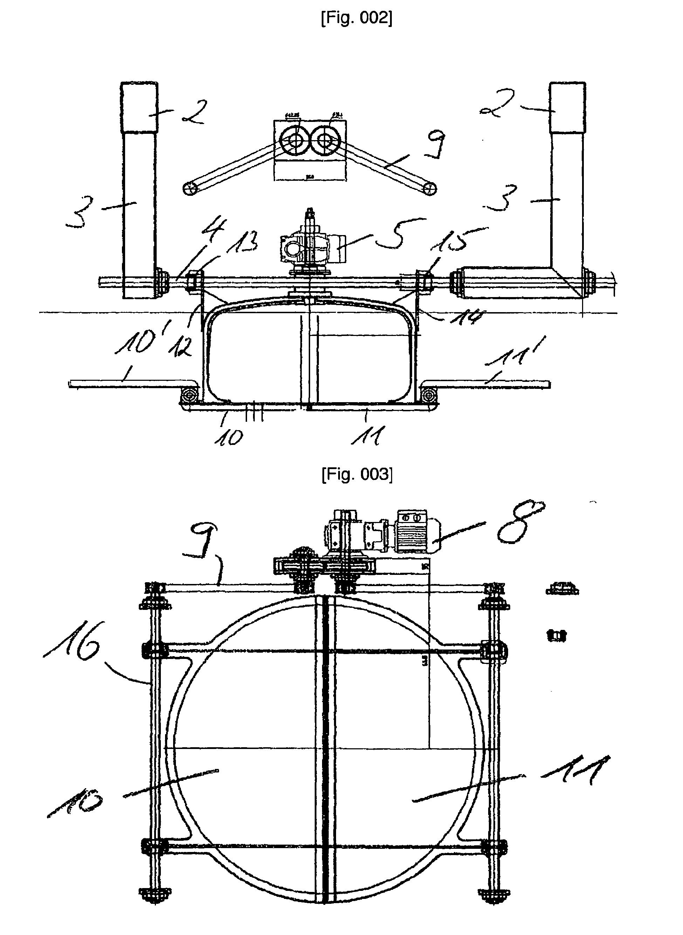

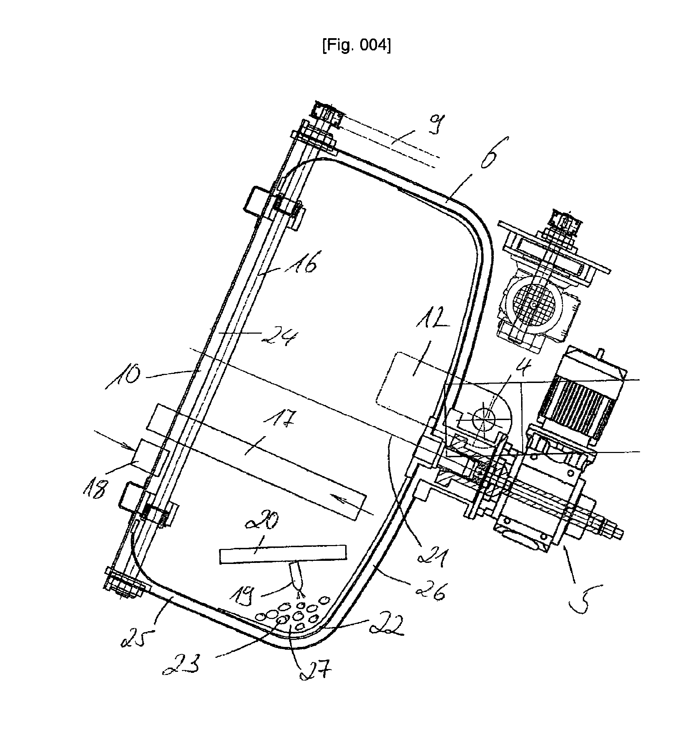

Fig. 1 zeigt eine seitliche Schnittansicht einer erfindungsgemäßen Vorrichtung 1, bei der, wie sich insbesondere auch aus Fig. 2 ergibt, eine um eine Achse 21 drehbare Trommel 6 verschwenkbar an einem Gestell mit zwei senkrechten Säulen 2 und daran angeordneten Horizontalstreben 3 angeordnet ist, welche die zu beschichtenden Kleinteile 23 (siehe Fig. 4) aufnimmt. Zwischen den Horizontalstreben 3 ist ein Stab 4 vorgesehen, an dem die Trommel 6 über die Haltebleche 12 und 14 sowie die Drehlagerungen 13 und 15 verschwenkbar angeordnet ist, und zwar in eine Position 6', wie in Fig. 1 dargestellt. Durch das Verschwenken um den Stab 4 bzw. dessen Längsachse in die Position 6' kann die Trommel 6 in einfacher Weise geleert werden. Zum Verschwenken ist ein Antrieb in Form eines Elektromotors 7 vorgesehen.

Neben der Verschwenkbarkeit um den Stab 4 ist die Trommel um die Achse 21 drehbar, wobei hierzu der Elektromotor 5 als Drehantrieb vorgesehen ist.

Die Trommel 6 weist, wie insbesondere in Fig. 2 und 3 zu sehen ist, an der Trommelöffnung 24 (siehe Fig. 1 und 4) einen Verschluss in Form von zwei Verschlussklappen 10 und 11 auf, die aus einer geschlossenen Position in eine geöffnete Position 10' und 11' verschwenkt werden können und umgekehrt. Der hierfür vorgesehene Öffnungsmechanismus (siehe Fig. 2 und 3 sowie das dazwischen dargestellte Detail) umfasst einen Elektromotor 8 und ein Gestänge 9, 16, an welchem die Verschlussklappen 10 und 11 angeordnet sind. Durch eine Betätigung des Motors 8 und dadurch ausgelöste Bewegung des Gestänges 9 und 16 können die Verschlussklappen 10 und 11 geöffnet und geschlossen werden.

Wie sich insbesondere aus den Fig. 1 und 4 ergibt, sind an zumindest einer Verschlussklappe Öffnungen in Form von Durchführstutzen 17 und 18 vorgesehen. Diese Durchführstutzen 17 und 18 dienen als Zuluftöffnung 18 und Abluftöffnung 17. Der Zuluftstutzen 18 erstreckt sich hierbei lediglich durch die Verschlussklappe 10 und ist somit nur geringfügig länger als die Verschlussklappe 10 dick ist. Dagegen ist der Abluftstutzen 17 deutlich länger und entspricht in etwa der Tiefe der Trommel 6, so dass die abgeführte Luft unmittelbar von der der Trommelöffnung 24 gegenüber liegenden Rückwand 26 abgeführt wird. Damit wird eine vollständige Entlüftung des gesamten Trommelraums gewährleistet.

Für die Absaugung ist eine Absaugeinrichtung vorgesehen (nicht gezeigt), die mit dem Abluftstutzen 17 verbunden ist und vorzugsweise über einen Ventilator die Luft aus der Trommel 6 absaugt und über einen Abluftfilter die Restpartikel aus der Abluft entfernt.

Durch die Anordnung von Zu- und Abluftstutzen 18 und 17 an der Verschlussklappe 10 wird erreicht, dass die Stutzen 17 und 18 beim Entleeren, also wenn die Trommel 6 in der Position 6' ist, nicht mehr in den Trommelraum hineinragen und den Entleerungsprozess stören könnten.

Ebenfalls an der Verschlussklappe 10 oder an der zweiten Verschlussklappe 11 ist das schematisch dargestellte Strahlungsgerät 20 und die ebenfalls schematisch dargestellte Sprühpistole 19 angeordnet, wobei dies nicht im einzelnen gezeigt ist.

Die Sprühpistole 19 ist so angeordnet, dass sie in Richtung der Mulde 27, die durch die umlaufende Seitenwand 25 und die der Trommelöffnung 24 gegenüber liegende Rückwand 26 gebildet ist, ausgerichtet ist. Dies gilt auch für des Strahlungsgerät 20, das benachbart zur Sprühpistole 20 angeordnet ist.

In der Mulde 27 sammeln sich die in der Trommel 6 aufgenommenen Kleinteile 23, wenn die Trommel 6 in der Beschichtungsposition ist, wie in den Fig. 1 und 4 gezeigt. Die Beschichtungsposition ist gekennzeichnet durch eine Neigung der Drehachse 21 gegenüber der Horizontalen, damit die zu beschichtenden Kleinteile in der Mulde 27 angehäuft werden. Durch die Verschwenkbarkeit der Trommel 6 um den Stab 4 bzw. dessen Längsachse kann die Neigung der Trommel 6 bzw. der Drehachse 21 beliebig variiert werden, und zwar vorzugsweise zwischen 0° und 90°.

An der Trommelinnenwand sind beabstandet entlang des Umfangs an der Seitenwand 25 sternförmig an der Rückwand 26 zur Trommelachse 21 zusammen laufend Mitnehmerrippen 22 vorgesehen, die in den Trommelraum hervor stehen und dazu dienen die in der Trommel 6 aufgenommenen Kleinteile 23 auf Grund der Drehbewegung der Trommel 6 umzuwälzen.

Die Form der Trommel 6 mit kreisrundem Querschnitt und ebenfalls kreisrunde Trommelöffnung 24 sowie einer trichterförmigen Rückwand 26 und der zylinderförmigen Seitenwand 25 ist so gewählt, um eine gute Durchmischung sowie Applizierung des Beschichtungsstoffes bei gleichzeitig hohem Fassungsvermögen zu gewährleisten. Insbesondere der gerundete Übergang von Seitenwand 25 zur Rückwand 26 trägt hierzu bei.

Die Sprühpistole 19 ist über eine Versorgungsleitung (nicht gezeigt) mit der Versorgungseinrichtung des Beschichtungsstoffes sowie entsprechend bei Bedarf mit der Zuführeinrichtung für einen Hilfs- oder Trägerstoff, wie Luft oder Wasserdampf verbunden. Die Sprühpistole 19 sorgt für eine Zerstäubung des Beschichtungsstoffes und eine feine Abscheidung des Beschichtungsstoffes auf den zu beschichtenden Kleinteilen, wobei hierfür sämtliche bekannte Verfahren eingesetzt werden können, wie insbesondere auch Wasserdampf unterstütztes Spritzen. Insbesondere ist die Sprühpistole 19 so ausgelegt, dass kleinste Mengen an Beschichtungsstoff in feinsten Tropfen oder Pulvermengen abgegeben werden können, um dünne Filme mit sehr kleiner Schichtdicke auf den zu beschichtenden Kleinteilen zu erzeugen. Dabei sind die erzeugten Schichtdicken so gering, dass der erzeugte Beschichtungsfilm bei den vorherrschenden Temperaturen bzw. Umgebungsbedingungen unmittelbar trocknet und/oder aushärtet.

Die entsprechende Temperatur bzw. die notwendigen Umgebungsbedingungen werden bei der vorliegenden Erfindung durch Strahlungsenergie erzeugt, wobei als Energiestrahler vorzugsweise Infrarot (IR) - Strahler oder Ultraviolett (UV) - Strahler eingesetzt werden. Bei den IR-Strahlern kommen kurzwellige, mittelwellige oder langwellige IR-Strahler mit Wellenlängen vorzugsweise im Bereich von 800 bis 5000nm oder IR-Strahler mit einem dem Infraroten nahen Wellenlängenspektrum (near IR oder NIR) zum Einsatz. Geeignet haben sich auch sogenannte Carbon IR-Strahler mit mittelwelligem Spektrum erwiesen. UV-Strahler kommen insbesondere bei UV-aushärtenden Lacksystemen zum Einsatz.

Durch die Energiestrahler des Strahlungsgeräts 20 können die Kleinteile 23 sehr schnell auf die für die Trocknung und/oder Aushärtung erforderliche Temperatur von beispielsweise 50 bis 100°C, vorzugsweise 60 bis 80°C, insbesondere 70°C gebracht werden und/oder der Beschichtungsstoff, insbesondere Lack kann in kürzester Zeit getrocknet und/oder ausgehärtet werden.

Die Vorrichtung 1 wird so betrieben, dass in der in Fig. 1 gezeigten Beschichtungsposition oder einer anderen geeigneten Neigung der Trommel 6 durch die geöffnete Trommelöffnung 24 das zu beschichtende Gut in Form von Kleinteilen 23 aufgegeben wird. Nach Verschließen der Trommelöffnung 24 durch die Betätigung der Verschlussklappen 10 und 11 wird die Trommel 6 mittels des Motors 5 in eine Drehbewegung um die Achse 21 versetzt, wodurch die Kleinteile 23 umgewälzt werden. Gleichzeitig mit der Drehbewegung der Trommel wird das Strahlungsgerät 20 aktiviert, so dass die Kleinteile 23 erwärmt werden. Nach Erreichen der notwendigen Mindesttemperatur der Kleinteile, welche durch entsprechende Sensoren ermittelt werden kann, beginnt die Sprühpistole 19 mit der Abgabe des Beschichtungsstoffs in kleinen Portionen. Der Beschichtungsstoff, der sich durch die feine Zerstäubung durch die Sprühpistole 19 in einer sehr dünnen Schicht auf den Kleinteilen 23 abscheidet, wird durch die Strahlungsenergie bzw. die dadurch erzeugte Temperatur sofort getrocknet bzw. ausgehärtet, so dass durch die weitere Bewegung der Kleinteile 23 keine unerwünschten Schichtfehler entstehen.

Das Strahlungsgerät 20 kann ausgehend von der beispielsweise durch die Sensoren (nicht gezeigt) ermittelten Temperatur in der Trommel 6 bzw. der Kleinteile 23 bedarfsgerecht an- und ausgeschaltet oder in der Leistung reguliert werden. Hierfür kann eine entsprechende Steuerung oder Regelung vorgesehen sein, die vorzugsweise durch einen programmierbaren Computer gebildet wird. Auch die Abgabevorrichtung in Form der Sprühpistole 19 kann hierdurch gesteuert bzw. mittels entsprechender Parameter, wie Lösemittel- oder Wasserdampfgehalt in der Trommel 6 geregelt werden.

Während der Beschichtung werden über die Zu- und Abluftstutzen 18 und 17 die durch den trocknenden Beschichtungsstoff freigesetzten Lösemittel oder der entsprechende Wasserdampf bzw. entsprechender Pulverstaub abgesaugt und der Entsorgung zugeführt.

Nach einer gewissen Beschichtungszeit, wenn alle Kleinteile 23 gleichmäßig mit Beschichtungsstoff überzogen sind, wird die Drehbewegung der Trommel 6 gestoppt, das Strahlungsgerät 20 abgeschaltet oder zur Nachtrocknung noch eine gewisse Zeit betrieben und die Sprühpistole 19 abgedreht. Die Verschlussklappen 10 und 11 werden vorzugsweise nach einer kurzen Wartezeit geöffnet, wodurch auch die Stutzen 17 und 18 sowie das Strahlungsgerät 20 und die Sprühpistole 19 aus dem Trommelraum entfernt werden. Danach kann die Trommel 6 in die Entleerposition 6' gekippt werden, wodurch die beschichteten Kleinteile 23 in eine Auffangeinrichtung (nicht gezeigt) gelangen. Nach dem Zurückkippen der Trommel 6 in die Beschichtungsposition kann ein neuer Beschichtungsprozess beginnen.

Durch die schnelle Trocknung und/oder Aushärtung auf Grund der eingebrachten Strahlungsenergie führt das erfindungsgemäße Verfahren zu einer Leistungssteigerung, was Beschichtungsdauer, Mengendurchsatz und Beschichtungsqualität anbelangt.

Obwohl das vorher beschriebene Ausführungsbeispiel eine bevorzugte Realisierung der Erfindung darstellt, können doch einzelne Komponenten durch gleichartige und gleich wirkende Mittel ersetzt werden. Neben den vorher dargestellten Verschlusselementen 10 und 11 können so auch andere geeignete Mittel vorgesehen werden, wie beispielsweise ein einziger Deckel. Dieser kann insbesondere auch durch eine andersartige Verschlussbewegung betätigt werden, z.B. durch eine Schiebebewegung. Auch die beschriebenen Verschwenk- und Öffnungsmechanismen können durch andere geeignete Mechanismen ersetzt werden. Gleiches gilt für die Antriebe, die nicht nur durch die dargestellten Elektromotoren realisiert werden können. Auch andere geeignete Strahlungsquellen sind denkbar.

## Patentansprüche

1. Beschichtungsvorrichtung für die Lackierung von Massenkleintellen.
mit einem bewegbaren Aufnahmeelement (6) zur Aufnahme und Bewegung der Massenkleinteile (23) und mindestens einer in dem Aufnahmeelement angeordneten Abgabevorrichtung (19) zur Abgabe des Beschichtungsstoffes in das Aufnahmeelement
**dadurch gekennzeichnet, dass**
mindestens ein Infrarot (IR) - Strahlungsgerät (20) zur Abgabe von Infrarot (IR)-Strahlung in das Aufnahmeelement zur Trocknung und/oder Aushärtung des Beschichtungsstoffes vorgesehen Ist, wobei das Aufnahmeelement eine drehbare Trommel (6) ist, wobei die Abgabevorrichtung eine Luft- oder Wasserdampf unterstützte Spritz- oder Sprühpistole (19) ist, die so ausgestaltet ist, dass Sprühoder Spritzstöße von sehr kurzer Dauer erfolgen können, wobei das Strahlungsgerät (20) mindestens einen Strahler aus der Gruppe umfassend kurzmittel- oder langwellige IR-Strahler, CIR-Strahler und NIR-Strahler umfasst, wobei Temperatur- und/oder Gas- oder Dampfsensoren vorgesehen sind, deren Ausgangssignal durch eine Steuerung oder Regelung zur Steuerung oder Regelung des Strahlungsgeräts (20) verarbeitet werden,
wobei das Strahlungsgerät während der Lackierung in dem Aufnahmeelement angeordnet ist und in den Aufnahmeraum des Aufnahmeelements hinein und heraus bewegbar ist und wobei ein verschwenkbarer Deckel zum Verschließen einer Aufnahmeöffnung (24) des Aufnahmeelements zum Be- und Entladen der zu beschichtenden Massenkleinteile vorgesehen ist und wobei an dem Deckel (10) das Strahlungsgerät (20) angeordnet ist, so dass das Strahlungsgerät (20) durch Betätigung des Deckels in den Aufnahmeraum des Aufnahmeelements hinein und heraus bewegbar ist.

2. Beschichtungsvorrichtung nach einem der vorhergehenden Ansprüche,
**dadurch gekennzeichnet, dass**
an dem Aufnahmeelement (6) und/oder dem Deckel (10,11) Öffnungen für Zu- und Abluft (17,18) vorgesehen sind, wobei vorzugsweise die Zuluftöffnung einen Zuluftstutzen (18) aufweist, dessen Auslassöffnung in der Nähe des Deckels endet, und die Abluftöffnung einen Abluftstutzen (17) aufweist, dessen Eingangsöffnung in der Nähe der dem Deckel gegenüberliegenden Rückwand (26) angeordnet ist.

3. Beschichtungsvorrichtung nach Anspruch 2,
**dadurch gekennzeichnet, dass**
an der Abluftöffnung (17) eine Absaugvorrichtung, mit einem Ventilator vorgesehen ist.

4. Verfahren zur Lackierung von Massenkleinteilen, vorzugsweise mit einer Vorrichtung nach einem der vorhergehenden Ansprüche,
**gekennzeichnet durch**
die Bereitstellung einer Beschichtungseinrichtung (1) mit einem bewegbaren Aufnahmeelement (6) zur Aufnahme und Bewegung der Massenkieintelle,
mit mindestens einer in dem Aufnahmeelement angeordneten Abgabevorrichtung (19) zur Abgabe des Beschichtungsstoffes In das Aufnahmeelement, und mit mindestens einem Strahlungsgerät (20) zur Abgabe von Infrarot (IR) - Strahlen in das Aufnahmeelement, wobei das Aufnahmeelement eine drehbare Trommel (6) ist, wobei die Abgabevorrichtung eine Luft- oder Wasserdampf unterstützte Spritzoder Sprühpistole (19) ist, die so ausgestaltet ist, dass Sprüh- oder Spritzstöße von sehr kurzer Dauer erfolgen, wobei das Strahlungsgerät (20) mindestens einen Strahler aus der Gruppe umfassend kurz-, mittel- oder langwellige IR-Strahler, CIR-Strahler und NIR-Strahler umfasst, wobei Temperatur- und/oder Gas- oder Dampfsensoren vorgesehen sind, deren Ausgangssignal **durch** eine Steuerung oder Regelung zur Steuerung oder Regelung des Strahlungsgeräts (20) verarbeitet werden,
wobei das Strahlungsgerät während der Lackierung in dem Aufnahmeelement angeordnet ist und in den Aufnahmeraum des Aufnahmeelements hinein und heraus bewegbar ist und wobei ein verschwenkbarer Deckel zum Verschließen einer Aufnahmeöffnung (24) des Aufnahmeelements zum Be- und Entladen der zu beschichtenden Massenkleinteile vorgesehen ist und wobei an dem Deckel (10) das Strahlungsgerät (20) angeordnet ist, so dass das Strahlungsgerät (20) **durch** Betätigung des Deckels in den Aufnahmeraum des Aufnahmeelements hinein und heraus bewegbar Ist,
Einfüllen der zu beschichtenden Massenkleinteile (23) in das Aufnahmeelement (6) der Bewegungseinrichtung,
Bewegen der Massenkleinteile in der Beschichtungseinrichtung unter gleichzeitiger zumindest intervallartiger Infrarot (IR) - Bestrahlung, zumindest intervallartig Abgabe des Lacks **durch** die Abgabevorrichtung (19) auf die sich bewegenden Massenkleinteile unter gleichzeitiger Trocknung und/oder Härtung **durch** die zumindest intervallartige Infrarotbestrahlung und
Entfernen der Massenkleinteile nach einem Zeltraum der Beschichtung.

5. Verfahren nach Anspruch 4,
**dadurch gekennzeichnet, dass**
vor der Abgabe des Lacks die Massenkleinteile durch Infrarot (IR) - Bestrahlung auf eine Mindesttemperatur gebracht werden.

6. Verfahren nach Anspruch 4 oder 5,
**dadurch gekennzeichnet, dass**
der Lack in kleinen Mengen kontinuierlich oder in kleinen Dosen durch einzelne aufeinander folgende Sprüh- oder Spritzstöße abgegeben wird, so dass der Lack durch die durch die Infrarot (IR)-Strahlung erzeugte Temperatur und/oder Umgebungsbedingungen auf den Massenkleinteilen unmittelbar trocknet und/oder aushärtet.

7. Verfahren nach Anspruch 6,
**dadurch gekennzeichnet, dass**
der Lack durch Luft oder Wasserdampf unterstütztes Spritzen aufgebracht wird.

8. Verfahren nach einem der vorhergehenden Ansprüche,
**dadurch gekennzeichnet, dass**
die Massenkleinteile Metallteile oder Kunststoffteile mit beliebig geformten dreidimensionalen Konturen sind.

9. Verfahren nach einem der vorhergehenden Ansprüche,
**dadurch gekennzeichnet, dass**
der Lack lösemittelhaltiger oder wasserlöslicher Lack oder Pulver ist.

## Claims

1. Coating device for the surface coating of mass-produced small parts with a movable receiver element (6) for receiving and moving the mass-produced small parts (23) and at least one dispenser device (19) which is arranged in the receiver element and the purpose of which is to dispense the surface coating into the receiver element, **characterised by** the fact that at least one infrared (IR) emitter device (20) is provided for emitting infrared (IR) radiation into the receiver element for the purpose of drying and/or hardening the surface coating, wherein the receiver element is a rotatable drum (6), wherein the dispenser device is an air-or water-vapour-assisted spraying or squirting gun (19), which is configured such that spray or squirt blasts of very short duration can be made, wherein the emitter device (20) comprises at least one emitter from the group comprising short-, medium- or long-wave IR emitters, CIR emitters and NIR emitters, wherein temperature and/or gas or vapour sensors are provided whose output signals are processed by a controller or regulator for controlling or regulating the emitter device (20), wherein the emitter device is arranged in the receiver element during the coating process and can be moved into and out of the receiving chamber of the receiver element and wherein is provided a pivotable cover for closing a receiver opening (24) of the receiver element for the purpose of loading and unloading the mass-produced small parts to be coated and wherein the emitter device (20) is arranged on the cover (10) such that the emitter device (20) can be moved into and out of the receiving chamber of the receiver element by actuating the cover.

2. Coating device in accordance with any of the previous claims, **characterised by** the fact that, at the receiver element (6) and/or cover (10, 11), are provided openings for intake air and exhaust air (17, 18), wherein preferably the intake air opening has an air intake nozzle (18), whose outlet opening ends in the vicinity of the cover, and the exhaust air opening has an exhaust air nozzle (17), whose inlet opening is arranged in the vicinity of the rear wall (26) opposite the cover.

3. A coating device in accordance with claim 2, **characterised by** the fact that a suction device with a fan is provided at the exhaust air opening (17).

4. Method for coating mass-produced small parts, preferably with an apparatus in accordance with any of the previous claims, **characterised by** the provision of a coating device (1) with a movable receiver element (6) for receiving and moving the mass-produced small parts with at least one dispenser device (19) which is arranged in the receiver element and the purpose of which is to dispense the surface coating into the receiver element, and with at least one emitter device (20) for emitting infrared (IR) radiation into the receiver element, wherein the receiver element is a rotatable drum (6), wherein the dispenser device is an air- or water-vapour-assisted spraying or squirting gun (19), which is configured such that spray or squirt blasts of very short duration can be made, wherein the emitter device (20) comprises at least one emitter from the group comprising short-, medium - or long-wave IR emitters, CIR emitters and NIR emitters, wherein temperature and/or gas or vapour sensors are provided whose output signals are processed by a controller or regulator for controlling or regulating the emitter device (20), wherein the emitter device is arranged in the receiver element during the coating process and can be moved into and out of the receiving chamber of the receiver element and wherein is provided a pivotable cover for closing a receiver opening (24) of the receiver element for the purpose of loading and unloading the mass-produced small parts to be coated and wherein the emitter device (20) is arranged on the cover (10) such that the emitter device (20) can be moved into and out of the receiving chamber of the receiver element by actuating the cover, filling of the mass-produced parts (23) to be coated into the receiver element (6) of the movement device, moving of the mass-produced small parts in the coating device with simultaneous, at least intermittent infrared (IR) irradiation, at least intermittent dispensing of the surface coating by the dispenser device (19) onto the moving mass-produced small parts with simultaneous drying and/or hardening by the at least intermittent infrared irradiation and removing of the mass-produced small parts after a period of coating.

5. Method in accordance with claim 4, **characterised by** the fact that the mass-produced small parts are brought to a minimum temperature by means of infrared (IR) irradiation prior to dispensing of the surface coating.

6. Method in accordance with claim 4 or 5, **characterised by** the fact that the surface coating is dispensed continuously in small amounts or in small doses by single successive spraying or squirting blasts, such that the coating immediately dries and/or hardens on the mass-produced small parts due to the temperature generated by the infrared (IR) radiation and/or environmental conditions.

7. Method in accordance with claim 6, **characterised by** the fact that the surface coating is applied by air- or water-vapour-assisted spraying.

8. Method in accordance with any of the previous claims, **characterised by** the fact that the mass-produced small parts are metal parts or plastic parts with arbitrarily shaped three-dimensional contours.

9. Method in accordance with any of the previous claims, **characterised by** the fact that the surface coating is a solventborne or waterborne surface coating or powder.

## Revendications

1. Dispositif d'enduction pour le laquage de petites pièces en série avec un élément de réception mobile (6) pour la réception et le déplacement des petites pièces en série (23) et au moins un dispositif de distribution (19) placé dans l'élément de réception pour la distribution de la matière d'enduction dans l'élément de réception,
**caractérisé en ce**
**qu'**il est prévu au moins un appareil de rayonnement (20) infrarouge (IR) pour émettre un rayonnement infrarouge (IR) dans l'élément de réception pour le séchage et/ou le durcissement de la matière d'enduction, cependant que l'élément de réception est un tambour rotatif (6), cependant que le dispositif de distribution est un pistolet de pulvérisation ou d'atomisation (19) assisté par de l'air ou de la vapeur d'eau qui est configuré de telle manière que les jets d'atomisation ou de pulvérisation peuvent avoir lieu avec une durée très courte, cependant que l'appareil de rayonnement (20) comprend au moins un émetteur du groupe comprenant les émetteurs infrarouges, les émetteurs infrarouges et carbone (CIR émetteur de rayonnement) et les émetteurs proches infrarouges (NIR émetteur de rayonnement) à ondes courtes, moyennes ou longues, cependant que des capteurs de température et/ou de gaz ou de vapeur sont prévus dont le signal de sortie est traité par une commande ou un réglage pour la commande ou le réglage de l'appareil de rayonnement (20), cependant que l'appareil de rayonnement est placé dans l'élément de réception pendant le laquage et est mobile en entrant et sortant de l'espace de réception de l'élément de réception et cependant qu'un couvercle pivotant est prévu pour fermer une ouverture de réception (24) de l'élément de réception pour charger et décharger les petites pièces en série à enduire et cependant que l'appareil de rayonnement (20) est placé sur le couvercle (10) si bien que l'appareil de rayonnement (20) est mobile en entrant et sortant de l'espace de réception de l'élément de réception par l'actionnement du couvercle.

2. Dispositif d'enduction selon l'une des revendications précédentes, **caractérisé en ce que** des ouvertures pour l'air d'entrée et l'air de sortie (17, 28) sont prévues sur l'élément de réception (6) et/ou sur le couvercle (10, 11), cependant que l'ouverture d'air d'entrée présente de préférence une tubulure d'air d'entrée (18) dont l'ouverture d'évacuation débouche à proximité du couvercle et l'ouverture d'air de sortie présente une tubulure d'air de sortie (17) dont l'ouverture d'entrée est placée à proximité de la paroi arrière (26) en face du couvercle.

3. Dispositif d'enduction selon la revendication 2, **caractérisé en ce qu'**il est prévu un dispositif d'aspiration avec un ventilateur sur l'ouverture d'air de sortie (17).

4. Procédé pour le laquage de petites pièces en série, de préférence avec un dispositif selon l'une des revendications précédentes, **caractérisé par** la mise à disposition d'un dispositif d'enduction (1) avec un élément de réception mobile (6) pour la réception et le déplacement des petites pièces en série avec au moins un dispositif de distribution (19) placé dans l'élément de réception pour la distribution de la matière d'enduction dans l'élément de réception et avec au moins un appareil de rayonnement (20) infrarouge (IR) pour émettre un rayonnement infrarouge (IR) dans l'élément de réception pour le séchage et/ou le durcissement de la matière d'enduction, cependant que l'élément de réception est un tambour rotatif (6), cependant que le dispositif de distribution est un pistolet de pulvérisation ou d'atomisation (19) assisté par air ou vapeur d'eau qui est configuré de telle manière que les jets d'atomisation ou de pulvérisation peuvent avoir lieu avec une durée très courte, cependant que l'appareil de rayonnement (20) comprend au moins un émetteur du groupe comprenant les émetteurs infrarouges, les émetteurs infrarouges et carbone (CIR émetteur de rayonnement) et les émetteurs proches infrarouges (NIR émetteur de rayonnement) à ondes courtes, moyennes ou longues, cependant que des capteurs de température et/ou de gaz ou de vapeur sont prévus dont le signal de sortie est traité par une commande ou un réglage pour la commande ou le réglage de l'appareil de rayonnement (20), cependant que l'appareil de rayonnement est placé dans l'élément de réception pendant le laquage et est mobile en entrant et sortant de l'espace de réception de l'élément de réception et cependant qu'un couvercle pivotant est prévu pour fermer une ouverture de réception (24) de l'élément de réception pour charger et décharger les petites pièces en série à enduire et cependant que l'appareil de rayonnement (20) est placé sur le couvercle (10) si bien que l'appareil de rayonnement (20) est mobile en entrant et sortant de l'espace de réception de l'élément de réception par l'actionnement du couvercle,
le remplissage des petites pièces en série à enduire (23) dans l'élément de réception (6) du dispositif de déplacement,
le déplacement des petites pièces en série dans le dispositif d'enduction avec rayonnement infrarouge (IR) simultané au moins par intervalles, distribution au moins par intervalles de la laque par le dispositif de distribution (19) sur les petites pièces en série qui se déplacent avec séchage et/ou durcissement simultané par le rayonnement infrarouge au moins par intervalles et enlèvement des petites pièces en série après une période d'enduction.

5. Procédé selon la revendication 4, **caractérisé en ce que** les petites pièces en série sont amenées à une température minimale par le rayonnement infrarouge (IR) avant la distribution de la laque.

6. Procédé selon la revendication 4 ou 5, **caractérisé en ce que** la laque est distribuée en continu ou à petites doses par des jets d'atomisation ou de pulvérisation individuels qui se succèdent de telle manière que la laque sèche et/ou durcit immédiatement sur les petites pièces en série par la température produite par le rayonnement infrarouge (IR) et/ou les conditions ambiantes.

7. Procédé selon la revendication 6, **caractérisé en ce que** la laque est appliquée par pulvérisation assistée par de l'air ou de la vapeur d'eau.

8. Procédé selon l'une des revendications précédentes, **caractérisé en ce que** les petites pièces en série sont des pièces en métal ou des pièces en matière plastique avec des contours tridimensionnels formés quelconques.

9. Procédé selon l'une des revendications précédentes, **caractérisé en ce que** la laque est une laque qui contient des solvants ou une laque soluble dans l'eau ou une poudre.
